# EUROPÄISCHE PATENTSCHRIFT

(11) **EP 3 319 752 B1**
(45) Veröffentlichungstag und Bekanntmachung des Hinweises auf die Patenterteilung: **02.08.2023**
(21) Anmeldenummer: 16730686.9
(22) Anmeldetag: 14.06.2016
(51) Int. Cl.: B23K 9/013, B23K 10/00, B23K 37/04, B23K 26/16, B23K 26/38, B23K 26/142

(54) **HALTEVORRICHTUNG FÜR SCHNEIDMASCHINEN**
HOLDING DEVICE FOR CUTTING MACHINES
DISPOSITIF DE MAINTIEN DE COUPE DE MACHINES

(30) Priorität: 10.07.2015 DE 102015008820
(43) Veröffentlichungstag der Anmeldung: 16.05.2018
(73) Patentinhaber: Lubas Maschinen GMBH, 41540 Dormagen (DE); Schewe, Heinz-Walter, 58135 Hagen (DE)
(72) Erfinder: LUBAS, Michael, 41540 Dormagen (DE)
(74) Vertreter: Cohausz Hannig Borkowski Wißgott
(86) Internationale Anmeldenummer: PCT/EP2016/000986
(87) Internationale Veröffentlichungsnummer: WO 2017/008872

(56) Entgegenhaltungen:
- WO-A1-2011/129002
- CN-A- 103 619 765
- JP-A- H11 245 062
- JP-A- 2002 126 891
- US-A1- 2010 078 413
- US-A1- 2012 031 147

## Beschreibung

Die Erfindung betrifft eine Schneidmaschine zum Schneiden von band- oder plattenförmigem Material aus Metall, Pappe, Papier oder Kunststoff durch einen Laser-, Wasser- oder Plasmastrahl mit mindestens einem Führungsteil, das auf der dem Schneidkopf abgewandten Seite des plattenförmigen Materials nahe dem Schneidspalt angeordnet ist und mindestens eine Gasaustrittsöffnung oder Gasaustrittsdüse aufweist oder trägt, deren austretendes Gas auf den aus dem Schneidspalt austretenden Strahl gerichtet ist.

Beim Schneiden von band- oder plattenförmigem Material insbesondere Blech durch einen Laser entstehen kleinste Metallpartikel, die aus dem Schneidspalt nach unten gesprüht werden und sich auf der Werkstückoberfläche und auf der Schneidkante festsetzen. Dies wird noch dadurch verstärkt, dass der nach unten austretende Schneidstrahl als Sprühfontaine ständig unkontrolliert seine Richtung wechselt und ferner Bleche häufig auf ihrer Oberfläche Schichten aufweisen, die die Partikel festhalten.

Aus der JP H11 245062 A ist es bekannt, bei einer Laserschneidmaschine weit unterhalb der Stelle, an der der Laserstrahl durch das flache Werkstück hindurchtritt, seitlich Gas auf die Sprühfontaine auftreffen zu lassen, die der Laserstrahl erzeugt, um die entstandenen Materialpartikel (Staub) zu oxydieren und damit die Gefahr einer Entzündung/Explosion zu beseitigen. Ein so tiefes Auftreffen führt auch zu Verwirbelungen der Sprühfontaine und damit zur Verschmutzung der Werkstückoberfläche durch Materialpartikel.

Aus der CN 103 619 765 A ist es bekannt, Glasscheiben durch einen Laser zu schneiden und auf den Schneidabschnitt ein Hilfsgas zu blasen, um das Schmelzen des Glases zu unterstützen. Hiermit soll die Glasscheibe in einem Produktabschnitt und in einen nicht Produktabschnitt aufgeteilt werden.

Aus der US 2012/031147 A1 ist es bekannt, ein Flachmaterial insbesondere Glas durch einen Laser zu schneiden und hierbei die Glasplatte durch Druckluft als auch durch Ansaugen in seiner exakten Lage während des Schneidens zu halten. Gleichzeitig wird das Flachmaterial an der zu schneidenden Stelle durch aus Düsen austretendes Kühlmedium insbesondere durch Gas gekühlt.

Aufgabe der Erfindung ist es, eine Schneidmaschine der eingangs genannten Art so zu verbessern, dass der aus dem Schneidspalt austretende Schneidstrahl insbesondere in Form einer Sprühfontaine sicher geführt und gerichtet wird und hierbei die durch das Schneiden entstehenden Materialpartikel in eine Richtung gebracht werden, in der sie sich auf das Werkstück nicht absetzen können.

Auch ist es Aufgabe der Erfindung, das zu schneidende band- oder plattenförmige Material im Bereich des Schneidspalts sicher zu halten. Insbesondere um die beiden Schneidkanten bzw. Stirnseiten des Werkstücks während und nach dem Schneiden in gleicher Höhe zu halten.

Diese Aufgabe wird erfindungsgemäß dadurch gelöst,
- dass zu beiden Seiten des Schneidspalts je ein Führungsteil angeordnet ist,
- dass das jeweilige Führungsteil die Form einer zum Schneidspalt parallelen Leiste aufweist, und
- dass eine Oberfläche des jeweiligen Führungsteils parallel zur Unterseite des plattenförmigen Materials angeordnet ist,
- dass die Führungsteile, die auf der dem Schneidkopf abgewandten Seite des plattenförmigen Materials nahe dem Schneidspalt angeordnet sind, eine zur Unterseite des plattenförmigen Materials parallele Oberfläche aufweisen, mit der das jeweilige Führungsteil an der Unterseite des plattenförmigen Materials anliegt oder die mit der Unterseite einen schmalen Zwischenspalt bildet, durch den Gas strömt,
- dass die parallele Oberfläche mindestens eine Gaseintritts- oder Gasaustrittsöffnung aufweist oder trägt, die auf die Unterseite des darüberliegenden Bereichs des plattenförmigen Materials gerichtet ist und mittels der das plattenförmige Material ansaugbar ist.

Hierdurch wird der aus dem Schneidspalt austretende Schneidstrahl sicher geführt und geleitet, so dass der Schneidstrahl nicht mehr unkontrolliert in unterschiedlicher Richtung sich bewegt. Die im Schneidstrahl befindlichen Materialpartikel werden in eine Richtung gebracht, in der sie sich nicht auf der Werkstückoberfläche absetzen können. Auch kann durch das Führungsteil das Werkstück im Bereich des Schnittspaltes sicher gehalten werden.

Zu beiden Seiten des Schneidspalts ist je ein Führungsteil angeordnet. Da hierdurch jedes der zwei Führungsteile mindestens eine Gasaustrittsöffnung oder Gasaustrittsdüse aufweist, wird der austretende Schneidstrahl noch sicherer geführt. Auch können die zwei Führungsteile die beiden an den Schneidspalt angrenzenden Materialflächen noch sicherer in derselben Höhe halten.

Eine konstruktiv einfache und hoch wirksame Konstruktion wird geschaffen, da das jeweilige Führungsteil die Form einer zum Schneidspalt parallelen Leiste aufweist. Auch ist hierzu von Vorteil, dass eine Flachseite bzw. Oberfläche des jeweiligen Führungsteils parallel zur Unterseite des plattenförmigen Materials angeordnet ist.

Vorzugsweise wird vorgeschlagen, dass das Führungsteil an der Unterseite des plattenförmigen Materials anliegt oder mit der Unterseite einen engen spaltförmigen Zwischenraum / Zwischenspalt von 0,1 bis 1,0 mm bildet. Auch ist zweckmäßig, wenn zwei zueinander parallel angeordnete Führungsteile zwischen sich einen Spalt bilden, durch die der aus dem Schneidspalt austretende Strahl hindurchtritt.

Eine konstruktiv besonders einfache und genau arbeitende Vorrichtung ist dann gegeben, wenn das Führungsteil/die Führungsteile mit dem Schneidkopf zur synchronen Bewegung verbunden ist/sind. Auch wird vorgeschlagen, dass das austretende Gas Druckluft ist.

Es wird auch vorgeschlagen, die Gasaustrittsöffnung oder Gasaustrittsdüse im Zwischenspalt zwischen der Werkstückunterseite und der Oberfläche des Führungsteils eine Saugwirkung auf die Unterseite des plattenförmigen Materials aufgrund des hydrodynamischen Paradoxon-Effekts erzeugt.

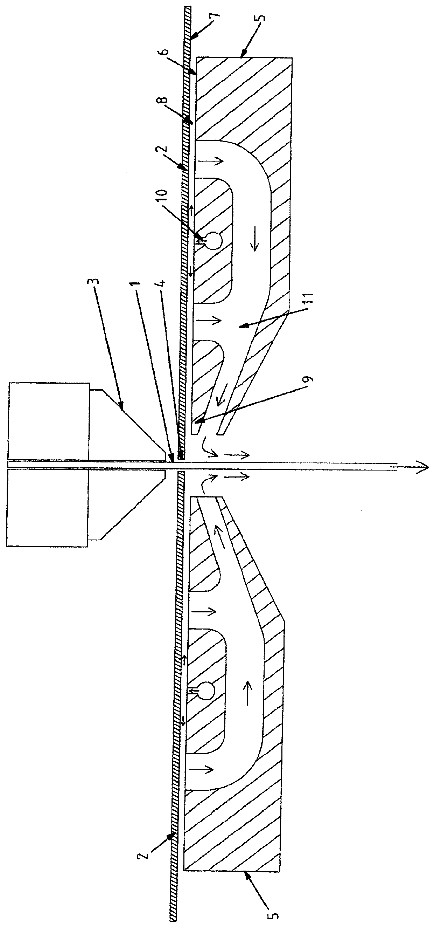

Ein Ausführungsbeispiel der Erfindung ist in der Zeichnung in einem senkrechten Schnitt schematisch dargestellt und wird im Folgenden näher beschrieben.

Die Erfindung befasst sich mit einer Schneidmaschine, die mit einem Schneidstrahl 1 (Laser-, Wasser- oder Plasmastrahl) ein bandförmiges oder plattenförmiges Material (Werkstück) 2 aus Metall, Pappe, Papier oder Kunststoff schneidet. Hierbei tritt der Schneidstrahl 1 aus einem Schneidkopf 3 aus, der über das Werkstück entlang der Schnittlinie geführt wird. Beim Schneiden entsteht ein Schneidspalt 4, durch den der Schneidstrahl 1 nach unten hindurchtritt, um an der Werkstückunterseite sich zu verbreitern insbesondere zu einer Sprühfontaine.

Auf der Unterseite des platten- oder bandförmigen Materials liegen ein, vorzugsweise zwei Führungsteile 5 an, die im Ausführungsbeispiel von zwei Leisten gebildet sind. Hierbei liegen die Oberflächen 6 der Führungsteile 5 entweder direkt an der Unterseite 7 des Werkstückes an oder bilden mit der Werkstückunterseite 7 einen schmalen Zwischenspalt 8, durch den Gas insbesondere Pressluft strömt, wie weiter unten beschrieben.

Jedes Führungsteil 5 besitzt eine Gasaustrittsöffnung insbesondere eine Gasaustrittsdüse 9 (vorzugsweise Pressluft), die auf den Schneidstrahl 1 gerichtet ist, um diesen eine gewünschte, möglichst unveränderliche Richtung zu geben. Bei einer Anordnung von zwei Führungsteilen 5 mit jeweils mehreren in Richtung des Schnittspalts hintereinander angeordneten Düsen 9 wird der Schneidstrahl sicher geführt und eingeengt. Hierbei sind die Führungsteile 5 mit dem Schneidkopf 3 mechanisch oder steuerelektronisch gekoppelt, so dass die Führungsteile 5 zusammen mit ihren Düsen synchron mit dem Schneidkopf verfahren.

Die Oberflächen 6 beider insbesondere leistenförmiger Führungsteile 5 besitzen Gasaustrittsöffnungen 10 - vorzugsweise Pressluft. Das austretende Gas erzeugt im Zwischenspalt 8 einen Unterdruck, so dass die beiden Ränder des Werkstücks nahe dem Schneidspalt 4 an die Führungsteile herangesaugt werden. Diese physikalische Wirkung erfolgt aufgrund des hydrodynamischen Paradoxon-Effekts. In einer alternativen Ausführung tritt aus den Öffnungen 10 Gas nicht aus, sondern durch die Öffnungen 10 wird Luft angesaugt, um durch diesen Unterdruck die Unterfläche 7 anzusaugen.

Innerhalb jedes Führungsteils 5 befinden sich Kanäle 11, die die Öffnungen 9 und 10 miteinander verbinden, so dass jedes Führungsteil nur mit einer Gasdruck- bzw. Pressdruckquelle oder Unterdruckquelle verbunden ist.

## Patentansprüche

1. Schneidmaschine zum Schneiden von band- oder plattenförmigem Material (2) aus Metall, Pappe, Papier oder Kunststoff durch einen Laser-, Wasser-oder Plasmastrahl (1) mit mindestens einem Führungsteil (5), das auf der dem Schneidkopf (3) abgewandten Seite des plattenförmigen Materials (2) nahe dem Schneidspalt (4) angeordnet ist und mindestens eine Gasaustrittsöffnung oder Gasaustrittsdüse (9) aufweist oder trägt, deren austretendes Gas auf den aus dem Schneidspalt (4) austretenden Strahl gerichtet ist, **dadurch gekennzeichnet,**
- **dass** zu beiden Seiten des Schneidspalts (4) je ein Führungsteil (5) angeordnet ist,
- **dass** das jeweilige Führungsteil (5) die Form einer zum Schneidspalt (4) parallelen Leiste aufweist, und
- **dass** eine Oberfläche (6) des jeweiligen Führungsteils (5) parallel zur Unterseite (7) des plattenförmigen Materials (2) angeordnet ist,
- **dass** die Führungsteile (5), die auf der dem Schneidkopf (3) abgewandten Seite des plattenförmigen Materials (2) nahe dem Schneidspalt (4) angeordnet sind, jeweils eine zur Unterseite (7) des plattenförmigen Materials (2) parallele Oberflläche (6) aufweisen, mit der das jeweilige Führungsteil (5) an der Unterseite (7) des plattenförmigen Materials anliegt oder die mit der Unterseite (7) einen schmalen Zwischenspalt (8) bildet, durch den Gas strömt,
- **dass** die jeweilige parallele Oberfläche (6) mindestens eine Gaseintritts-oder Gasaustrittsöffnung (10) aufweist oder trägt, die auf die Unterseite (7) des darüberliegenden Bereichs des plattenförmigen Materials (2) gerichtet ist und mittels der das plattenförmige Material ansaugbar ist.

2. Schneidmaschine nach Anspruch 1, **dadurch gekennzeichnet, dass** das jeweilige Führungsteil (5) an der Unterseite (7) des plattenförmigen Materials (2) anliegt oder mit der Unterseite (7) einen Zwischenspalt (8) von 0,1 bis 1,0 mm bildet.

3. Schneidmaschine nach Anspruch 1 oder 2, **dadurch gekennzeichnet, dass** zwei zueinander parallel angeordnete Führungsteile (5) zwischen sich einen Spalt bilden, durch den der aus dem Schneidspalt (4) austretende Strahl hindurchtritt.

4. Schneidmaschine nach einem der vorherigen Ansprüche, **dadurch gekennzeichnet, dass** die Führungsteile (5) mit dem Schneidkopf (3) zur synchronen Bewegung verbunden sind.

5. Schneidmaschine nach einem der vorherigen Ansprüche, **dadurch gekennzeichnet, dass** das austretende Gas Druckluft ist.

6. Schneidmaschine nach einem der vorherigen Ansprüche, **dadurch gekennzeichnet, dass** die Gasaustrittsöffnung oder Gasaustrittsdüse (10) im Zwischenspalt (8) zwischen der Werkstückunterseite (7) und der Oberfläche (6) des Führungsteils (5) eine Saugwirkung auf die Unterseite (7) des plattenförmigen Materials (2) aufgrund des hydrodynamischen Paradoxon-Effekts erzeugt.

## Claims

1. Cutting machine for cutting strip-form or sheet-form material (2) made of metal, cardboard, paper or plastic by means of a laser beam, water jet or plasma jet (1), having at least one guide part (5) which is arranged close to the cutting gap (4) on the side of the sheet-form material (2) facing away from the cutting head (3) and has or carries at least one gas outlet opening or gas outlet nozzle (9), the gas emerging from which is directed at the beam or jet emerging from the cutting gap (4), **characterized**
- **in that** a guide part (5) is arranged on each of the two sides of the cutting gap (4),
- **in that** the respective guide part (5) has the form of a bar parallel to the cutting gap (4), and
- **in that** a surface (6) of the respective guide part (5) is arranged parallel to the underside (7) of the sheet-form material (2),
- **in that** the guide parts (5), which are arranged close to the cutting gap (4) on the side of the sheet-form material (2) facing away from the cutting head (3), have a respective surface (6) which is parallel to the underside (7) of the sheet-form material (2) and by means of which the respective guide part (5) bears against the underside (7) of the sheet-form material or which, together with the underside (7), forms a narrow intermediate gap (8) through which gas flows,
- **in that** the respective parallel surface (6) has or carries at least one gas inlet opening or gas outlet opening (10) which is directed at the underside (7) of the region located thereabove of the sheet-form material (2) and makes it possible to suck the sheet-form material into place.

2. Cutting machine according to Claim 1, **characterized in that** the respective guide part (5) bears against the underside (7) of the sheet-form material (2) or forms, together with the underside (7), an intermediate gap (8) of 0.1 to 1.0 mm.

3. Cutting machine according to Claim 1 or 2, **characterized in that** two guide parts (5) that are arranged parallel to one another form a gap between one another, through which the beam or jet emerging from the cutting gap (4) passes out.

4. Cutting machine according to one of the preceding claims, **characterized in that** the guide parts (5) are connected to the cutting head (3) for synchronous movement.

5. Cutting machine according to one of the preceding claims, **characterized in that** the emerging gas is compressed air.

6. Cutting machine according to one of the preceding claims, **characterized in that** the gas outlet opening or gas outlet nozzle (10) generates, in the intermediate gap (8) between the workpiece underside (7) and the surface (6) of the guide part (5), a suction action on the underside (7) of the sheet-form material (2) on account of the hydrodynamic paradox effect.

## Revendications

1. Machine de coupe permettant de couper un matériau (2) en forme de bande ou de plaques, en métal, en carton, en papier ou en matière plastique, à l'aide d'un faisceau laser, d'un jet d'eau ou d'un jet de plasma (1), comprenant au moins une partie de guidage (5) qui est disposée sur le côté, détourné de la tête de coupe (3), du matériau en forme de plaque (2) à proximité de la fente de coupe (4) et présente ou porte au moins un orifice de sortie de gaz ou une buse de sortie de gaz (9) dont le gaz sortant est dirigé sur le faisceau/jet sortant de la fente de coupe (4),
**caractérisée**
- **en ce qu'**une partie de guidage (5) est disposée respectivement des deux côtés de la fente de coupe (4),
- **en ce que** la partie de guidage (5) respective présente la forme d'une baguette parallèle à la fente de coupe (4), et
- **en ce qu'**une surface (6) de la partie de guidage (5) respective est disposée en parallèle à la face inférieure (7) du matériau en forme de plaque (2),
- **en ce que** les parties de guidage (5), qui sont disposées sur le côté détourné de la tête de coupe (3) du matériau en forme de plaque (2) à proximité de la fente de coupe (4), présentent respectivement une surface (6) parallèle à la face inférieure (7) du matériau en forme de plaque (2), par laquelle la partie de guidage (5) respective repose contre la face inférieure (7) du matériau en forme de plaque ou forme, avec la face inférieure (7), une fente intermédiaire (8) étroite à travers laquelle s'écoule du gaz,
- **en ce que** la surface (6) respectivement parallèle présente ou porte au moins un orifice d'entrée de gaz ou de sortie de gaz (10) qui est dirigé sur la face inférieure (7) de la zone se trouvant au-dessus du matériau en forme de plaque (2) et au moyen duquel le matériau en forme de plaque peut être aspiré.

2. Machine de coupe selon la revendication 1, **caractérisée en ce que** la partie de guidage (5) respective repose contre la face inférieure (7) du matériau en forme de plaque (2) ou forme avec la face inférieure (7) une fente intermédiaire (8) étroite de 0,1 à 1,0 mm.

3. Machine de coupe selon la revendication 1 ou 2, **caractérisée en ce que** deux parties de guidage (5) disposées en parallèle l'une par rapport à l'autre forment entre elles une fente à travers laquelle passe le jet sortant de la fente de coupe (4).

4. Machine de coupe selon l'une des revendications précédentes, **caractérisée en ce que** les parties de guidage (5) sont reliées à la tête de coupe (3) pour un déplacement synchrone.

5. Machine de coupe selon l'une des revendications précédentes, **caractérisée en ce que** le gaz sortant est de l'air comprimé.

6. Machine de coupe selon l'une des revendications précédentes, **caractérisée en ce que** l'orifice de sortie de gaz ou la buse de sortie de gaz (10) produit dans la fente intermédiaire (8) entre la face inférieure de la pièce (7) et la surface (6) de la partie de guidage (5) un effet d'aspiration sur la face inférieure (7) du matériau en forme de plaque (2) en raison de l'effet du paradoxe hydrodynamique.
